(19) Europäisches Patentamt
European Patent Office
Office européen des brevets

(11) **EP 4 763 672 A1**

(12) **DEMANDE DE BREVET EUROPEEN**

(43) Date de publication:
**24.06.2026 Bulletin 2026/26**

(21) Numéro de dépôt: 25224007.2

(22) Date de dépôt: **16.12.2025**

(51) Classification Internationale des Brevets (IPC):
*B62D 15/02* (2006.01) *B60W 30/06* (2006.01)

(52) Classification Coopérative des Brevets (CPC):
**B62D 15/0285; B60W 30/06**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **18.12.2024 FR 2414425**

(71) Demandeur: AMPERE s.a.s.
**92100 Boulougne-Billancourt (FR)**

(72) Inventeurs:
• **AMBROISE, Stephanie**
**78280 Guyancourt (FR)**
• **GAROT, Regis**
**78280 Gyuancourt (FR)**

(74) Mandataire: **Renault Group**
**Renault s.a.s.**
**1 avenue du Golf**
**FR TCR AVA 055**
**78084 Guyancourt Cedex (FR)**

(54) **PROCÉDÉ DE GARAGE AUTOMATIQUE D'UN VÉHICULE AUTOMOBILE**

(57) Procédé de garage automatique d'un véhicule (1) automobile sur une place de stationnement (16), comprenant une phase (P2) de contrôle automatique de l'angle de braquage des roues directrices pour garer le véhicule sur la place de stationnement comprenant :
- une étape (E5) de comparaison d'une estimation de la vitesse (V) du véhicule fournie par un moyen d'estimation de la vitesse du véhicule avec un seuil de vitesse (Vs) prédéfini, puis
- si la vitesse (V) du véhicule est strictement inférieure au seuil de vitesse, une étape (E4) de déplacement du véhicule lors de laquelle l'angle de braquage des roues directrices est limité à un premier angle de braquage (Amax1) maximal prédéfini.

[Fig. 2]

## Description

### Domaine Technique de l'invention

L'invention concerne un procédé de garage automatique d'un véhicule automobile sur une place de stationnement. L'invention porte aussi sur un véhicule automobile comprenant des moyens matériels et logiciels adaptés pour mettre en œuvre un tel procédé de garage

### Etat de la technique antérieure

Le garage d'un véhicule automobile sur une place de stationnement est une opération assez difficile à réaliser par un conducteur car elle requiert une très bonne appréciation des dimensions du véhicule et des différents obstacles autour du véhicule. Pour faciliter le garage d'un véhicule, on connaît à présent des véhicules dotés d'un système de garage automatique, également dénommé par l'anglicisme « Hand free Parking ». Un tel système comprend des moyens de détection de la position et des dimensions de la place de stationnement, et un actionneur apte à braquer des roues directrices du véhicule. Un tel système détermine, grâce auxdits moyens de détection, une ou plusieurs manœuvres nécessaires pour garer le véhicule sur la place de stationnement, puis contrôle de manière autonome le braquage des roues directrices avec ledit actionneur pour suivre les manœuvres précédemment déterminées. Le conducteur n'a donc pas besoin de toucher le volant pour se garer.
L'actionneur doit être suffisamment puissant pour braquer les roues directrices de manière complètement autonome, c'est-à-dire sans l'aide d'un conducteur agissant sur le volant du véhicule. L'intégration d'un système de garage automatique requiert ainsi des actionneurs particulièrement encombrants et complexes à fabriquer. On connaît également des systèmes de garage automatique dont l'actionneur s'appuie sur un module de direction assistée. Un tel module comprend également un actionneur apte à agir de manière autonome sur les roues directrices. Toutefois, cet actionneur est généralement relativement peu puissant puisqu'il est avant tout destiné à assister l'effort exercé par le conducteur sur le volant. Pour réaliser un système de garage automatique au moyen d'un module de direction assistée, il est connu de limiter l'angle de braquage des roues directrices à une valeur strictement inférieure à un angle de braquage maximal absolu correspondant aux limites mécaniques du système de direction du véhicule automobile. Au cours d'une manœuvre de garage automatique du véhicule, l'angle de braquage des roues directrices est ainsi généralement limité à environ 80% de l'angle de braquage maximal absolu. Cette limitation permet certes de préserver le module de direction assistée et/ou de recourir à un actionneur relativement léger mais pénalise l'efficacité du système de garage automatique. En effet, la limitation de l'angle de braquage conduit à augmenter le nombre de manœuvres nécessaires pour garer le véhicule sur la place de stationnement.

### Présentation de l'invention

Le but de l'invention est de fournir un procédé de garage automatique et un véhicule équipé d'un système de garage automatique remédiant aux inconvénients ci-dessus et améliorant les procédés de garage automatique et les véhicules équipés d'un système de garage automatique connus de l'art antérieur.
Plus précisément, un premier objet de l'invention est un procédé de garage automatique qui, d'une part, préserve l'actionneur du module de direction et/ou est compatible avec un actionneur léger, et qui d'autre part permet de garer un véhicule sur une place de stationnement en un minimum de manœuvres.

### Résumé de l'invention

L'invention se rapporte à un procédé de garage automatique d'un véhicule automobile sur une place de stationnement, le véhicule comprenant des roues directrices, un actionneur configuré pour contrôler un angle de braquage des roues directrices, et un moyen d'estimation de la vitesse du véhicule,
le procédé de garage comprenant une phase de contrôle automatique de l'angle de braquage des roues directrices par ledit actionneur pour garer le véhicule sur la place de stationnement, la phase de contrôle automatique comprenant :

- une étape de comparaison d'une estimation de la vitesse du véhicule fournie par ledit moyen d'estimation de la vitesse du véhicule avec un seuil de vitesse prédéfini, puis
- si la vitesse du véhicule est strictement inférieure au seuil de vitesse, une étape de déplacement du véhicule lors de laquelle l'angle de braquage des roues directrices est limité à un premier angle de braquage maximal prédéfini, et
- si la vitesse du véhicule est strictement supérieure au seuil de vitesse, une étape de déplacement du véhicule lors de laquelle l'angle de braquage des roues directrices est limité à un deuxième angle de braquage maximal prédéfini, le deuxième angle de braquage étant strictement supérieur au premier angle de braquage.

La phase de contrôle automatique de l'angle de braquage des roues directrices peut comprendre une première séquence lors de laquelle le véhicule est à l'arrêt ou lors de laquelle le véhicule se déplace avec une vitesse strictement inférieure au seuil de vitesse, l'angle de braquage des roues directrices étant égal au premier angle de braquage, puis une deuxième séquence lors de laquelle le véhicule se déplace avec une vitesse strictement supérieure au seuil de vitesse, l'angle de braquage des roues directrices étant égal au deuxième angle de braquage.

Le procédé de garage peut comprendre une séquence de transition entre la première séquence et la deuxième séquence lors de laquelle la vitesse du véhicule est supérieure ou égal au seuil de vitesse et l'angle de braquage des roues augmente progressivement du premier angle de braquage au deuxième angle de braquage.

Le véhicule peut comprendre en outre des moyens de détection d'une place de stationnement, les moyens de détection étant configurés pour détecter une position et des dimensions de la place de stationnement, et le procédé de garage peut comprendre, préalablement à ladite phase de contrôle automatique de l'angle de braquage des roues directrices, une phase préparatoire comprenant le calcul d'au moins une trajectoire pour garer le véhicule sur la place de stationnement.

La phase de contrôle automatique de l'angle de braquage des roues directrices peut débuter par une étape de braquage des roues directrices jusqu'au premier angle de braquage au cours de laquelle le véhicule est à l'arrêt.

La place de stationnement peut être une place de stationnement en créneau ou en bataille ou en épi.

Le premier angle de braquage peut être égal à une valeur comprise entre 70% et 90% inclus d'un angle de braquage maximal absolu des roues directrices. Le deuxième angle de braquage peut être égal à une valeur comprise entre 90% et 100% inclus de l'angle de braquage maximal absolu des roues directrices. Le seuil de vitesse peut être compris entre 0.5km/h et 2km/h inclus.

L'invention se rapporte également à un véhicule automobile comprenant une unité de commande électronique comprenant une mémoire et un microprocesseur, des roues directrices, un actionneur configuré pour contrôler un angle de braquage des roues directrices, et un moyen d'estimation de la vitesse du véhicule, la mémoire de l'unité de commande électronique comprenant des instructions de code de programme configurées pour mettre en œuvre le procédé de garage tel que défini précédemment.

L'invention se rapporte également à un programme d'ordinateur comprenant des instructions qui, lorsque le programme est exécuté par un ordinateur, conduisent celui-ci à mettre en œuvre le procédé de garage tel que défini précédemment.

L'invention se rapporte également à un support d'enregistrement lisible par ordinateur comprenant des instructions qui, lorsqu'elles sont exécutées par un ordinateur, conduisent celui-ci à mettre en œuvre le procédé de garage tel que défini précédemment.

## Présentation des figures

Ces objets, caractéristiques et avantages de la présente invention seront exposés en détail dans la description suivante d'un mode de réalisation particulier fait à titre non-limitatif en relation avec les figures jointes parmi lesquelles :

La figure 1 est une vue schématique d'un véhicule automobile selon un mode de réalisation de l'invention.

La figure 2 est une vue schématique de dessus de la trajectoire suivie par le véhicule pour se garer sur une place de stationnement, d'un premier graphique illustrant l'évolution de l'angle de braquage des roues directrices du véhicule en fonction de la position longitudinale du véhicule, et d'un deuxième graphique illustrant l'évolution de la vitesse du véhicule en fonction de la position longitudinale du véhicule.

La figure 3 est un synoptique d'un procédé de garage automatique du véhicule selon un mode de réalisation de l'invention.

## Description détaillée

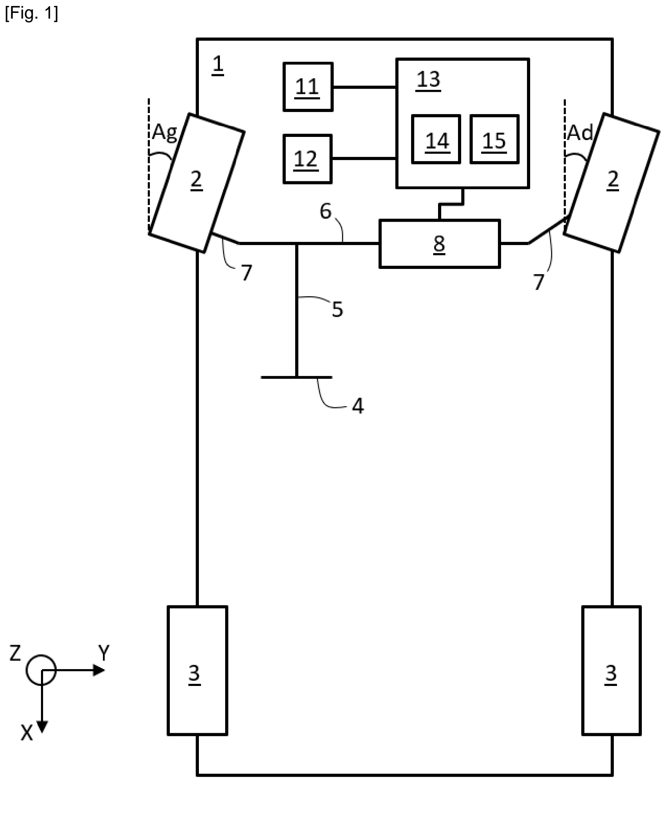

La figure 1 illustre schématiquement et en vue de dessus un véhicule 1 automobile selon un mode de réalisation de l'invention. Le véhicule 1 peut être, par exemple, un véhicule particulier, un véhicule utilitaire, un camion ou un bus. Le véhicule 1 comprend deux roues directrices 2 à l'avant, et deux roues non directrices 3 à l'arrière. En remarque, l'invention peut très bien être appliquée à un véhicule comprenant quatre roues directrices ou toute autre configuration de roues directrices et non directrices.

Le véhicule 1 est équipé d'un système de direction permettant de contrôler un angle de braquage des roues directrices 2. De manière conventionnelle, le système de direction comprend un volant 4 destiné à être manipulé par un conducteur du véhicule 1 et un mécanisme de transmission reliant mécaniquement le volant 4 aux roues directrices 2. Le mécanisme de transmission comprend notamment une colonne de direction 5, une crémaillère 6 et deux biellettes de direction 7. La colonne de direction 5 s'étend depuis le volant 4 jusqu'à la crémaillère 6 avec laquelle elle coopère par l'intermédiaire d'un pignon. Chaque biellette de direction 7 relie respectivement une extrémité de la crémaillère 6 à une roue directrice 2.

Le système de direction comprend également un actionneur 8 configuré pour contrôler le braquage des roues directrices de manière autonome, c'est-à-dire indépendamment de toute action d'un conducteur sur le volant 4. L'actionneur 8 peut être un module destiné à exercer une action mécanique sur la colonne de direction 5 ou sur la crémaillère 6. L'actionneur 8 peut comprendre un moteur électrique. L'actionneur 8 peut être un module de direction assistée, c'est-à-dire un module destiné à faciliter la rotation du volant 4 par le conducteur du véhicule 1.

L'axe X désigne l'axe longitudinal du véhicule 1.

En marche avant et en ligne droite, le véhicule 1 progresse de l'arrière vers l'avant selon une direction parallèle à son axe longitudinal. L'axe X est orienté de l'avant vers l'arrière du véhicule 1, c'est-à-dire dans le sens de la marche arrière. L'axe Y désigne l'axe transversal du véhicule 1. L'axe Y est orienté de la gauche vers la droite, la gauche et la droite étant définies selon le point de vue d'un conducteur du véhicule 1. L'axe Z désigne l'axe perpendiculaire à l'axe X et à l'axe Y. On considère que le véhicule 1 repose sur un sol horizontal. L'axe Z est un axe vertical, orienté de bas en haut. Les axes X, Y et Z forment un repère orthogonal.

Chaque roue 2, 3 est mobile en rotation de sorte à permettre la progression du véhicule 1 sur le sol. L'axe de progression d'une roue désigne l'axe vers lequel la roue 2, 3 se déplace lorsqu'elle tourne pour faire avancer le véhicule 1. L'axe de progression de chaque roue non directrice 3 est parallèle à l'axe X. L'axe de progression de chaque roue directrice forme avec l'axe X un angle de braquage Ag, Ad. L'angle de braquage Ag, Ad de chaque roue directrice est ainsi égal à zéro lorsque le véhicule 1 se déplace en ligne droite.

De manière classique, lorsque les roues directrices 2 sont pivotées pour tourner à droite ou à gauche, l'angle de braquage Ad d'une roue directrice droite peut être différent de l'angle de braquage Ag d'une roue directrice gauche. Par la suite, « l'angle de braquage des roues directrices » fera référence à une moyenne entre l'angle de braquage Ad et l'angle de braquage Ag. Le rayon de braquage R d'un véhicule 1, associé à un angle de braquage A, désigne le rayon d'un cercle le long duquel se déplace le véhicule 1 lorsque les roues directrices sont braquées selon l'angle de braquage A. Le rayon R et l'angle de braquage A sont liés par la formule $R = e * \tan(90°-A)$ où e désigne l'empattement du véhicule 1. Les roues directrices 2 sont dites tournées vers la gauche lorsque le véhicule 1 tourne vers la gauche lorsqu'il circule en marche avant. De même, les roues directrices 2 sont dites tournées vers la droite lorsque le véhicule 1 tourne vers la droite lors qu'il circule en marche avant.

Le mécanisme de transmission reliant mécaniquement le volant 4 aux roues directrices 2 comprend également des moyens de butée mécanique limitant mécaniquement l'angle de braquage des roues directrices 2. L'angle de braquage maximal absolu du système de direction désigne l'angle de braquage maximal permis par les moyens de butée mécanique. L'angle de braquage maximal absolu est donc défini par la conception mécanique du système de direction. Il peut être égal à une valeur comprise entre 35° et 45°, par exemple de l'ordre de 40°. Le rayon de braquage minimum absolu du véhicule 1, associé à l'angle de braquage maximal absolu peut être compris entre 10 mètres et 12 mètres, par exemple égal à environ 11 mètres.

Le véhicule 1 comprend également un moyen d'estimation de la vitesse 11 du véhicule 1. De manière classique, le moyen d'estimation de la vitesse 11 peut comprendre au moins un capteur apte à mesurer la vitesse de rotation d'au moins une roue 2 ou 3. Alternativement, le moyen d'estimation de la vitesse 11 peut comprendre un moyen de géolocalisation du véhicule 1, un calcul de dérivation de la position du véhicule 1 permettant de déterminer la vitesse du véhicule 1.

Le véhicule 1 comprend également des moyens de détection 12 d'une place de stationnement. Une place de stationnement, ou place de parking, désigne un emplacement prévu pour laisser un véhicule stationné. Une place de stationnement peut être identifiée, par exemple, par des marquages au sol et/ou par des éléments en reliefs tels qu'un trottoir et/ou par du mobilier urbain. Une place de stationnement présente généralement une forme de quadrilatère, notamment une forme rectangulaire avec un grand côté mesurant environ 5 mètres et un petit côté mesurant environ 2.5 mètres. Les moyens de détection 12 peuvent comprendre des capteurs tels qu'une caméra et/ou un ou plusieurs capteurs de proximité tel que des capteurs à ultrasons et/ou un radar et/ou un lidar. Ce ou ces capteurs peuvent être couplés avec des moyens logiciels adaptés pour identifier une place de stationnement, en estimer la longueur, la largeur, et la position relativement au véhicule 1. Les moyens de détection 12 sont ainsi configurés pour identifier la position des quatre sommets d'un quadrilatère définissant la place de stationnement. En variante, la détection de seulement trois sommets, voire seulement deux sommets du quadrilatère pourrait suffire pour détecter la place de stationnement.

Le véhicule 1 comprend également une unité de commande électronique 13 équipée d'une mémoire 14 et d'un microprocesseur 15. L'unité de commande électronique 13 est connectée directement ou indirectement à l'actionneur 8, au moyen d'estimation de la vitesse 11, aux moyens de détection 12. En particulier, l'unité de commande électronique 13 est destinée à recevoir des signaux d'information en provenance du moyen d'estimation de la vitesse 11 et en provenance des moyens de détection 12, et elle est destinée à émettre des commandes à l'actionneur 8 pour braquer les roues directrices dans une direction précédemment calculée.

Par ailleurs, de manière optionnelle, le véhicule 1 peut en outre comprendre tout ou partie des équipements suivants. Le véhicule 1 peut comprendre des capteurs configurés pour détecter des obstacles positionnés à faible distance du véhicule, par exemple des capteurs de proximité tels que des capteurs à ultrasons. Le véhicule 1 peut comprendre un écran destiné à être observé par le conducteur du véhicule. L'écran peut être configuré pour afficher un environnement du véhicule 1 et/ou des instructions à destination du conducteur. Le véhicule 1 peut également comprendre une interface de commande. L'interface de commande peut être adaptée pour lancer un procédé de garage tel qu'il va être décrit par la suite. Enfin, le véhicule 1 peut également comprendre des moyens de contrôle autonome de la vitesse du véhicule 1, c'est-à-dire des moyens aptes à agir sur un groupe motopropulseur du véhicule 1 pour entraîner des roues motrices du véhicule 1. Ces différents équipements sont avantageusement connectés directement ou indirectement à l'unité de commande électronique 13.

La mémoire 14 de l'unité de commande électronique 13 est un support d'enregistrement de données sur lequel est enregistré un programme d'ordinateur comprenant des instructions de code de programme de mise en œuvre d'un procédé de garage automatique du véhicule 1 selon un mode de réalisation de l'invention. Le microprocesseur 15 est apte à exécuter ce programme d'ordinateur. Comme nous allons le voir par la suite le procédé de garage automatique prévoit une prise de contrôle autonome, c'est-à-dire sans intervention du conducteur, du braquage des roues directrices 2 du véhicule 1. Le procédé de garage vise donc à assister le conducteur en braquant de manière optimale les roues directrices 2 pour positionner le véhicule 1 sur la place de stationnement 16.

Selon un mode de réalisation, le procédé de garage peut prendre le contrôle complet du véhicule en agissant à la fois sur le braquage des roues directrices 2 et sur le groupe motopropulseur du véhicule 1. Alternativement, le procédé de garage peut prendre un contrôle partiel du véhicule 1 en agissant uniquement sur le braquage des roues directrices 2, la gestion du groupe motopropulseur étant alors maintenue sous la responsabilité du conducteur. Dans cette deuxième hypothèse, des instructions selon lesquelles le véhicule doit avancer ou reculer peuvent être transmises au conducteur, notamment via un écran embarqué dans le véhicule 1.

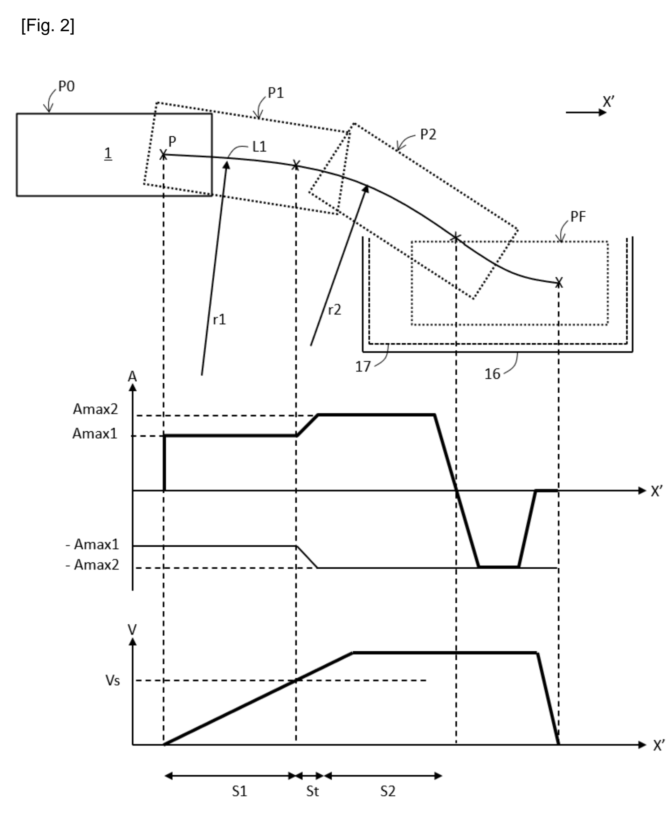

On décrit à présent plus en détail un mode de réalisation d'un procédé de garage selon l'invention en relation avec la figure 2.

La figure 2 illustre en vue de dessus le véhicule 1 dans une position initiale P0 et une place de stationnement 16 positionnée à proximité du véhicule 1. Le but du procédé de garage est d'assister le conducteur du véhicule 1 pour que le véhicule 1 se positionne sur la place de stationnement 16, de préférence au centre de la place de stationnement 16 et avec l'axe longitudinal X du véhicule 1 s'étendant parallèlement au grand côté de la forme rectangulaire de la place de stationnement 16. La position finale PF recherchée pour le véhicule 1 et diverses positions intermédiaires P1, P2 entre la position initiale P0 et la position finale PF sont indiquées par des rectangles en pointillés. Selon le mode de réalisation présenté, la place de stationnement 16 est une place en créneau, c'est-à-dire qu'un ensemble de manœuvres dite de « créneau » doivent être réalisées pour positionner le véhicule 1 sur la place de stationnement 16. En variante l'invention pourrait également être mise en œuvre pour positionner le véhicule 1 sur une place de stationnement en bataille ou en épis. Selon l'exemple de la figure 2, la position initiale P0 se situe à l'avant de la place de stationnement 16. La première manœuvre destinée à garer le véhicule 1 s'effectue en marche arrière. En variante, toute autre position initiale pourrait être envisagée.

Sur la figure 2, on a également illustré par une ligne courbe L1, la trajectoire d'un point central P du véhicule 1 permettant de garer le véhicule 1 sur la place de stationnement 16. La ligne courbe L1 a grossièrement la forme d'un « S ». Pour suivre la ligne courbe L1, le véhicule 1 doit d'abord tourner les roues vers la gauche puis vers la droite.

En complément, on a représenté sur la figure 2 un premier graphique illustrant l'angle de braquage A des roues directrices lorsque le véhicule 1 suit la ligne courbe L1, et un deuxième graphique illustrant la vitesse du véhicule V lorsque le véhicule 1 suit la ligne courbe L1. Les axes des abscisses du premier graphique et du deuxième graphique correspondent à la position longitudinale X' du véhicule 1 le long de la ligne courbe L1. La position longitudinale X' du véhicule 1 est définie comme la position du véhicule 1 suivant un axe parallèle à l'axe X lorsque le véhicule 1 est dans sa position initiale P0.

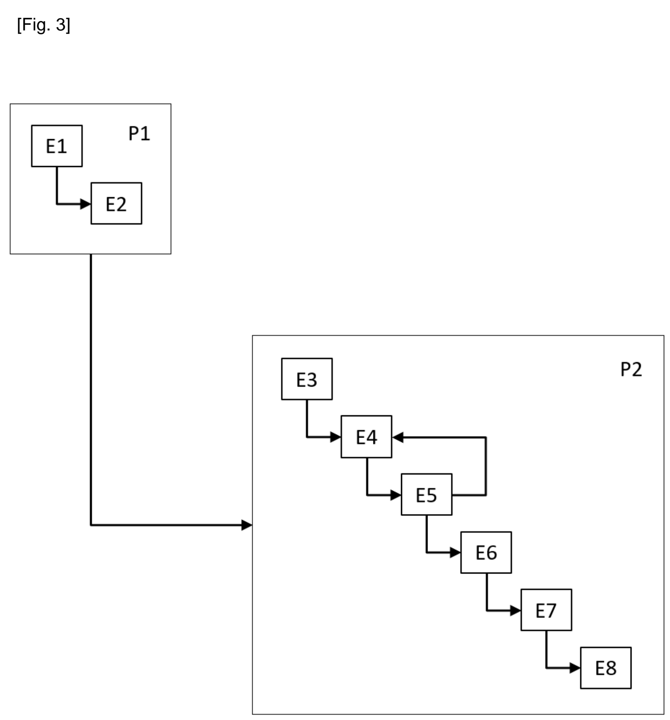

Un synoptique du procédé de garage automatique selon l'invention est illustré sur la figure 3. Le procédé de garage peut être décomposé en deux phases principales : une phase préparatoire P1 suivie d'une phase de contrôle automatique P2 du braquage des roues directrices 2 par l'actionneur 8 pour garer le véhicule 1 sur la place de stationnement 16.

Pour initier la phase préparatoire P1, le conducteur du véhicule 1 lance l'exécution du procédé de garage automatique, par exemple via une interface de commande embarquée dans le véhicule 1. Dans une première étape E1, les moyens de détection 12 d'une place de stationnement scannent l'environnement du véhicule 1 pour identifier une place de stationnement 16 dont les dimensions sont suffisantes pour y positionner le véhicule 1. Cette première étape peut être réalisée alors que le véhicule 1 avance, par exemple le long d'une file de véhicule stationnés. Plus précisément, les moyens de détection 12 identifient les positions des sommets d'un quadrilatère formé par une place de stationnement potentielle, en déduit les dimensions dudit quadrilatère, et compare les dimensions dudit quadrilatère avec un gabarit donné. Lorsqu'une place de stationnement 16 compatible avec ledit gabarit est identifiée, le conducteur du véhicule 1 est notifié, invité à s'arrêter, et à confirmer son souhait de garer son véhicule 1 sur cette place de stationnement 16.

Lorsque le conducteur confirme son intention de garer son véhicule 1 sur la place de stationnement 16, l'unité de commande électrique calcule, dans une deuxième étape E2, un ensemble de trajectoires que doit suivre le véhicule 1 pour déplacer le véhicule 1 de sa position actuelle, qui est une position initiale, à une position centrée sur la place de stationnement 16 qui est une position finale. Ce calcul est basé notamment sur la position des quatre sommets de la forme de quadrilatère de la place de stationnement 16. Avantageusement, une marge de sécurité est appliquée entre la position estimée des quatre sommets du quadrilatère détecté lors de l'étape E1 et un quadrilatère virtuel 17 sur la base duquel l'ensemble des trajectoires nécessaires pour garer le véhicule 1 sont calculées. Ceci permet de garantir une absence de collision entre le véhicule 1 et des obstacles détectés. L'ensemble des trajectoires nécessaires pour garer le véhicule 1 comprend une alternance de trajectoires en marche avant et en marche arrière. Le nombre de trajectoires que doit suivre le véhicule 1 pour parvenir à se positionner sur la place de stationnement 16 dépend de la taille de la place de stationnement 16, de la taille du véhicule 1 et de la position initiale P0 du véhicule 1 relativement à la place de stationnement 16. Selon le mode de réalisation présenté sur la figure 2, on suppose qu'une seule trajectoire en marche arrière suffit pour positionner le véhicule 1 sur la place de stationnement 16. Dans tous les cas, un nombre de trajectoires aussi faible que possible est recherché.

Le calcul de l'ensemble des trajectoires nécessaires pour garer le véhicule 1 peut éventuellement être renouvelé ultérieurement, au cours de la réalisation des manœuvres nécessaires pour suivre ces trajectoires, si les trajectoires réellement suivies par le véhicule 1 diffèrent des trajectoires précédemment calculées et/ou si de nouveaux obstacles sont détectés.

Lorsque les trajectoires sont calculées on démarre la phase de contrôle automatique P2 pour suivre lesdites trajectoires.

Lors d'une troisième étape E3, on braque les roues directrices 2 du véhicule 1 alors que le véhicule 1 est à l'arrêt à la position initiale P0. Les roues directrices 2 sont progressivement braquées par l'actionneur 8 jusqu'à un premier angle de braquage Amax1 prédéfini. Le premier angle de braquage Amax1 peut être égal à une valeur comprise entre 70% et 90% de l'angle de braquage maximal absolu, par exemple 80% de l'angle de braquage maximal absolu. Cette valeur peut être fixée par paramétrage. L'application d'un angle de braquage Amax1 modéré permet de préserver l'actionneur 8 et/ou permet de rendre le procédé de garage automatique compatible avec un actionneur relativement léger. En complément, et de manière avantageuse, un angle de braquage modéré permet d'éviter un effort de cisaillement important sur les pneus du véhicule 1 lié au pivotement des roues directrices 2 alors que le véhicule 1 est à l'arrêt.

Ensuite, lorsque les roues directrices 2 ont atteint le premier angle de braquage Amax1, on déplace le véhicule 1 dans une quatrième étape E4. En l'espèce, selon le mode de réalisation présenté, on déplace le véhicule 1 en marche arrière. Comme expliqué précédemment, le déplacement du véhicule 1 peut être autonome, c'est-à-dire contrôlé par l'unité de commande électronique 13 ou manuel, c'est-à-dire contrôlé par le conducteur du véhicule 1. Selon cette dernière option, le conducteur reçoit des instructions, notamment via un écran et/ou des capteurs de proximité embarqués dans le véhicule 1 pour contrôler la vitesse du véhicule 1 de manière adéquate.

Lors de la quatrième étape E4, le véhicule 1 se déplace avec les roues directrices 2 braquées selon le premier angle de braquage Amax1. Le véhicule 1 décrit donc une première partie de trajectoire en forme d'arc de cercle de rayon R1. Le rayon R1 correspond au premier angle de braquage Amax1, et est strictement supérieur au rayon de braquage minimum absolu du véhicule 1.

Dans une cinquième étape E5, la vitesse V du véhicule 1, fournie par le moyen d'estimation de la vitesse 11 du véhicule 1, est comparée à un seuil de vitesse Vs prédéfini. Le seuil de vitesse Vs peut être compris, de préférence, entre 0.5km/h et 2km/h inclus. Tant que la vitesse V du véhicule 1 est strictement inférieure au seuil de vitesse Vs, le véhicule 1 continue à se déplacer avec les roues directrices braquées selon le premier angle de braquage Amax1.

Dès que la vitesse V du véhicule 1 devient supérieure ou égale au seuil de vitesse Vs, on débute une sixième étape E6 lors de laquelle on augmente progressivement l'angle de braquage des roues directrices jusqu'à une deuxième angle de braquage Amax2, le deuxième angle de braquage Amax2 étant strictement supérieur au premier angle de braquage Amax1. Le deuxième angle de braquage Amax2 peut être égal à une valeur comprise entre 90% et 100% de l'angle de braquage maximal absolu, par exemple 95% de l'angle de braquage maximal absolu. Cette valeur peut également être fixée par paramétrage. L'augmentation de l'angle de braquage est facilitée par le déplacement simultané du véhicule 1. En effet, lorsque les roues directrices 2 roulent sur le sol, le coefficient de frottement de ces roues 2 est réduit et leur pivotement est plus simple à réaliser. Le pivotement des roues directrices 2 jusqu'au deuxième angle de braquage Amax2 reste possible même en utilisant un actionneur léger.

Ensuite, dans une septième étape E7, on poursuit le déplacement du véhicule 1 avec les roues directrices 2 braquées selon le deuxième angle de braquage Amax2. Le véhicule 1 décrit donc une deuxième partie de trajectoire en forme d'arc de cercle de rayon R2. Le rayon R2 correspond au deuxième angle de braquage Amax2, et est strictement inférieur au rayon R1. Dans l'hypothèse ou la vitesse V du véhicule 1 repasserait en dessous du seuil de vitesse Vs, voire deviendrait nulle au cours de la septième étape E7, on peut néanmoins conserver un angle de braquage égal au deuxième angle de braquage Amax2.

En relation avec la figure 2, on comprend que la trajectoire du véhicule 1 peut être décomposée en une pluralité de séquences S1, St, S2 consécutives. Lors de la première séquence S1, le véhicule 1 est à l'arrêt ou se déplace avec une vitesse V strictement inférieure au seuil de vitesse Vs. Lors de cette première séquence, l'angle de braquage des roues directrices 2 est égal au premier angle de braquage Amax1. Ensuite lors d'une séquence de transition St, la vitesse du véhicule 1 est supérieure ou égale au seuil de vitesse Vs et l'angle de braquage des roues 2 augmente progressivement du premier angle de braquage Amax1 au deuxième angle de braquage Amax 2. Ensuite, lors de la deuxième séquence S2, le véhicule 1 se déplace avec une vitesse strictement supérieure au seuil de vitesse Vs. L'angle de braquage des roues directrices 2 est alors égal au deuxième angle de braquage Amax2.

Lors de la séquence de transition St, le rayon de braquage R du véhicule 1 peut être calculé au moyen de la formule suivante :

$$1/R = a*s+b$$

où :

- R désigne le rayon de braquage R du véhicule 1,
- a = (1/R2-1/R1) /s0 où R1 et R2 sont les rayons correspondant respectivement aux angles de braquage Amax1 et Amax2 et s0 est une constante définie par paramétrage
- b = 1/R1,
- s désigne l'abscisse curviligne du véhicule 1 le long de la trajectoire définie par la ligne courbe L1.

Ainsi, on obtient R = R1 lorsque s = 0 et R = R2 lorsque s = s0.

Le paramètre s0 définit donc la longueur de la séquence de transition le long de la ligne courbe L1. Le paramètre s0 peut être par exemple égal à 10 cm.

Ensuite dans une huitième étape E8, la trajectoire précédemment calculée peut être poursuivie jusqu'à ce que le véhicule 1 atteigne une position adéquate sur la place de stationnement 16 ou jusqu'à ce que le véhicule 1 soit proche d'un obstacle donné. Au cours de la huitième étape E8, les capteurs de proximité assistent le conducteur du véhicule 1 et lui permettent d'ajuster sa vitesse et d'arrêter le véhicule 1 avant d'entrer en contact avec un obstacle. Au cours de la huitième étape E8, l'angle de braquage des roues directrices 2 peut éventuellement être réduit pour suivre la trajectoire calculée. En particulier, la trajectoire peut être poursuivie par une étape de contrebraquage lors de laquelle les roues directrices 2 sont tournées dans une direction opposée à celle des étapes précédentes. Lors de l'étape de contrebraquage, l'angle de braquage des roues directrices peut atteindre une valeur égale à -Amax2. Lorsque le véhicule 1 a atteint sa position finale PF ou une position proche de sa position finale PF, les roues directrices 2 peuvent être réorientées parallèlement à l'axe X du véhicule 1.

Finalement, on comprend que l'invention propose au moins deux limitations de l'angle de braquage des roues directrices 2 : si la vitesse du véhicule 1 est strictement inférieure au seuil de vitesse Vs prédéfini, on limite l'angle de braquage des roues directrices 2 au premier angle de braquage maximal Amax1 prédéfini. Si la vitesse du véhicule 1 est strictement supérieure au seuil de vitesse Vs, on limite l'angle de braquage des roues directrices 2 au deuxième angle de braquage maximal Amax2 prédéfini, strictement supérieur au premier angle de braquage maximal Amax1. Cette stratégie permet à la fois de préserver l'actionneur 8 ou de rendre le procédé de garage automatique compatible avec un actionneur 8 léger, et de réaliser un garage automatique performant, c'est-à-dire requérant un minimum manœuvres pour atteindre la place de stationnement 16.

En remarque, la limitation de l'angle de braquage équivaut à une limitation de l'angle au volant ou à une limitation du rayon de braquage du véhicule 1 puisque ces grandeurs sont reliées les unes aux autres par des constantes. En particulier, le rayon de braquage et l'angle de braquage sont liés par la formule R = e * tan(90°-A) définie précédemment. L'angle au volant et l'angle de braquage sont liés par une relation linéaire. Les explications précédentes données en relation avec l'angle de braquage des roues pourrait donc être formulées de manière analogue en relation avec l'angle au volant.

Bien sûr, si la trajectoire précédemment calculée lors de la deuxième étape E2 ne requiert pas d'atteindre le premier angle de braquage maximal prédéfini Amax1 ou le deuxième angle de braquage maximal prédéfini Amax2, alors le véhicule 1 suit cette trajectoire sans atteindre ces valeurs. Autrement dit, les angles de braquage Amax1 et Amax2 sont des limites à ne pas dépasser mais toutes les trajectoires de garage automatique ne requièrent pas nécessairement d'atteindre ces limites, notamment si la place de stationnement 16 est particulièrement large.

**Revendications**

1. Procédé de garage automatique d'un véhicule (1) automobile sur une place de stationnement (16), le véhicule comprenant des roues directrices (2), un actionneur (8) configuré pour contrôler un angle de braquage des roues directrices, et un moyen d'estimation de la vitesse (11) du véhicule,
le procédé de garage comprenant une phase (P2) de contrôle automatique de l'angle de braquage des roues directrices par ledit actionneur (8) pour garer le véhicule sur la place de stationnement, la phase de contrôle automatique comprenant :

- une étape (E5) de comparaison d'une estimation de la vitesse (V) du véhicule fournie par ledit moyen d'estimation de la vitesse du véhicule avec un seuil de vitesse (Vs) prédéfini, puis
- si la vitesse (V) du véhicule est strictement inférieure au seuil de vitesse, une étape (E4) de déplacement du véhicule lors de laquelle l'angle de braquage des roues directrices est limité à un premier angle de braquage (Amax1) maximal prédéfini, et
- si la vitesse (V) du véhicule est strictement supérieure au seuil de vitesse, une étape (E7) de déplacement du véhicule lors de laquelle l'angle de braquage des roues directrices est limité à un deuxième angle de braquage (Amx2) maximal prédéfini, le deuxième angle de braquage (Amax2) étant strictement supérieur au premier angle de braquage (Amax1).

2. Procédé de garage selon la revendication précédente, **caractérisé en ce que** la phase (P2) de contrôle automatique de l'angle de braquage des roues directrices comprend une première séquence (S1) lors de laquelle le véhicule est à l'arrêt ou lors de laquelle le véhicule se déplace avec une vitesse strictement inférieure au seuil de vitesse (Vs), l'angle de braquage des roues directrices étant égal au premier angle de braquage (Amax1), puis une deuxième séquence (S2) lors de laquelle le véhicule se déplace avec une vitesse strictement supérieure au seuil de vitesse, l'angle de braquage des roues directrices étant égal au deuxième angle de braquage.

3. Procédé de garage selon la revendication précédente, **caractérisé en ce qu'**il comprend une séquence de transition (St) entre la première séquence (S1) et la deuxième séquence (S2) lors de laquelle la vitesse du véhicule est supérieure ou égal au seuil de vitesse (Vs) et l'angle de braquage des roues augmente progressivement du premier angle de braquage au deuxième angle de braquage.

4. Procédé de garage automatique selon l'une des revendications précédentes, **caractérisé en ce que** le véhicule (1) comprend en outre des moyens de détection (12) d'une place de stationnement, les moyens de détection étant configurés pour détecter une position et des dimensions de la place de stationnement, et **en ce que** le procédé de garage comprend, préalablement à ladite phase (P2) de contrôle automatique de l'angle de braquage des roues directrices, une phase (P1) préparatoire comprenant le calcul d'au moins une trajectoire pour garer le véhicule sur la place de stationnement.

5. Procédé de garage automatique selon l'une des revendications précédentes, **caractérisé en ce que** la phase (P2) de contrôle automatique de l'angle de braquage des roues directrices débute par une étape (E3) de braquage des roues directrices jusqu'au premier angle de braquage (Amax1) au cours de laquelle le véhicule est à l'arrêt.

6. Procédé de garage selon l'une des revendications précédentes, **caractérisé en ce que** la place de stationnement est une place de stationnement en créneau ou en bataille ou en épi.

7. Procédé de garage selon l'une des revendications précédentes, **caractérisé en ce que** :

- le premier angle de braquage (Amax1) est égal à une valeur comprise entre 70% et 90% inclus d'un angle de braquage maximal absolu des roues directrices, et/ou **en ce que**
- le deuxième angle de braquage (Amax2) est égal à une valeur comprise entre 90% et 100% inclus de l'angle de braquage maximal absolu des roues directrices, et/ou **en ce que**
- le seuil de vitesse (Vs) est compris entre 0.5km/h et 2km/h inclus.

8. Véhicule (1) automobile comprenant une unité de commande électronique (13) comprenant une mémoire (14) et un microprocesseur (15), des roues directrices (2), un actionneur (8) configuré pour contrôler un angle de braquage des roues directrices, et un moyen d'estimation de la vitesse (11) du véhicule, la mémoire de l'unité de commande électronique comprenant des instructions de code de programme configurées pour mettre en œuvre le procédé de garage selon l'une des revendications précédentes.

9. Programme d'ordinateur comprenant des instructions qui, lorsque le programme est exécuté par un ordinateur, conduisent celui-ci à mettre en œuvre le procédé de garage selon l'une des revendications 1 à 7.

10. Support d'enregistrement (14) lisible par ordinateur comprenant des instructions qui, lorsqu'elles sont exécutées par un ordinateur, conduisent celui-ci à mettre en œuvre le procédé de garage selon l'une des revendications 1 à 7.

[Fig. 1]

[Fig. 2]

[Fig. 3]

**Europäisches Patentamt**
**European Patent Office**
**Office européen des brevets**

## RAPPORT DE RECHERCHE EUROPEENNE

Numéro de la demande

EP 25 22 4007

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JP 2019 064431 A (PANASONIC IP MAN CORP) 25 avril 2019 (2019-04-25) | 1-5,7-10 | INV. B62D15/02 B60W30/06 |
| Y | * alinéas [0012], [0013], [0022] - [0032]; revendications; figures * ----- | 6 | |
| Y | US 2020/117925 A1 (KREKEL MARKUS [DE] ET AL) 16 avril 2020 (2020-04-16) * alinéa [0077]; revendications; figures * ----- | 6 | |

**DOMAINES TECHNIQUES RECHERCHES (IPC)**

B62D
B60W

Le présent rapport a été établi pour toutes les revendications

| Lieu de la recherche | Date d'achèvement de la recherche | Examinateur |
|---|---|---|
| La Haye | 4 mai 2026 | Ducher, Alban |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 22 4007

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-05-2026

| Document brevet cité au rapport de recherche | Date de publication | Membre(s) de la famille de brevet(s) | Date de publication |
|---|---|---|---|
| JP 2019064431 A | 25-04-2019 | CN 109572686 A<br>JP 2019064431 A | 05-04-2019<br>25-04-2019 |
| US 2020117925 A1 | 16-04-2020 | CN 111047900 A<br>DE 102019127367 A1<br>US 2020117925 A1 | 21-04-2020<br>16-04-2020<br>16-04-2020 |

EPO FORM P0460

Pour tout renseignement concernant cette annexe : voir Journal Officiel de l'Office européen des brevets, No.12/82